# EUROPEAN PATENT APPLICATION

(11) **EP 1 284 246 A2**
(43) Date of publication of application: **19.02.2003**
(21) Application number: 02017729.1
(22) Date of filing: 08.08.2002
(51) Int. Cl.: C03B 37/014

(54) **Method and apparatus for producing porous glass soot body**

(30) Priority: 09.08.2001 JP 2001241775
(71) Applicant: Sumitomo Electric Industries, Ltd., Osaka (JP)
(72) Inventor: Ooishi, Toshihiro, Sumitomo Electric Ind., Ltd., Yokohama-shi, Kanagawa (JP); Nakamura, Motonori, Sumitomo Electric Ind., Ltd., Yokohama-shi, Kanagawa (JP); Yamazaki, Takashi, Sumitomo Electric Ind., Ltd., Yokohama-shi, Kanagawa (JP)
(74) Representative: HOFFMANN - EITLE

(57) **Abstract**

Vent holes are provided on a reaction vessel in the vicinity of burners which are placed in the reaction vessel. The gas of different flow rate and/or temperature is supplied through the vent holes toward a soot body in a length direction of the soot body.

## Description

### Background of the Invention

### Field of the Invention

The present invention relates to a method and an apparatus for producing a porous glass soot body. In the method, glass particles synthesized by glass particle synthesis burners are deposited on a surface of a starting rod, one layer after another, while reciprocating relatively the starting rod and the burners.

### Description of the Related Art

As a method for producing a large-sized porous glass soot body at high deposition rate, a plurality of glass particle synthesis burners are arranged at even intervals to be opposed to a starting rod within a reaction vessel, and the rotating starting rod and an array of burners are relatively reciprocated to deposit glass particles on a surface of the starting rod in layers, thereby producing a glass particle deposit (This method is referred multi-layers soot deposition method).

For the simpler explanation, it is supposed here that the starting rod is fixed, and the burners are reciprocated. In the above method, if a burner array consisting of a plurality of burners arranged at even intervals is reciprocated by a distance between adjacent burners (hereinafter called the burner interval), each burner deposits glass particles at an area corresponding to the burner interval of the surface of the starting rod to form a large-sized porous glass soot body. This method has the advantage that a deposition rate of glass particles is high and the large-sized porous glass soot body is produced. However, this methodhas a problem that at turn-back positions of the reciprocating movement of the burners, the deposition amount of glass particles is increased and thus a variation of an outer diameter of the porous glass soot body is increased, owing to the following two reasons. First reason is that the glass particles deposited by adjacent burners exist at the turn-back positions of the burners, so that the glass particles are deposited doubly at the turn-back positions. Second reason is that the burners remain at the turn-back positions for a longer time than where they are moved at steady rate since the driving of the burner array is once stopped at the turn-back positions.

In order to solve the above problem that arises at the turn-back positions of the burners, a method has been proposed in which the turn-back positions are moved by varying the transfer distance in a forward path and a backward path in the reciprocating movement (refer to Japanese Patent Unexamined Publication No. Hei. 3-228845). With this method, the turn-back positions in the relative reciprocating movement between the burners and the starting rod are dispersed over the entire length of the porous glass soot body to average the deposition amount of glass particles and make the outer diameter of the porous glass soot body uniform.

By the way, when the starting rod is increased in length (size), the weight of soot body is drastically increased, causing a problem with the equipment of horizontal type in which the starting rod is supported horizontally in the durability of the starting rod, whereby the equipment of vertical type in which the starting rod is supported vertically is needed.

With the equipment of vertical type, the heat generated in the burners flows upward and is accumulated on upper portion of the reaction vessel, so that the temperature of the atmosphere containing the entire soot body is changed in the length direction of soot body. This leads to a problem that the density of glass particles to be deposited is varied in the length direction of soot body. If the density of glass particles is varied in the length direction of soot body, the outer diameter of soot body is different in the length direction. This causes a difference in the efficiency of depositing glass particles, which further causes increase of the difference in the outer diameter of soot body. An optical fiber drawn from the soot body produced in this way had problems associated with the characteristics.

In Japanese Patent unexamined Publication No. Hei. 4-260618, a method for producing the porous glass soot body employing a plurality of burners in which an even air flow is generated over the entire length of porous glass soot body was disclosed. In the case where the burner array and the porous glass soot body are disposed so that they oriented in perpendicular direction, a high output end heater is placed in a region on the bottom of soot body to minimize the effect of thermal gradient along the length of porous glass soot body, and the magnitude of air flow in the horizontal direction must be selected (or increased) to minimize the unevenness of the outer diameter of soot body due to the convection air flow along the length of soot body.

However, the structure of the apparatus employing this method becomes complex. Because it is a strong acid atmosphere in the reaction vessel, the components of the. heater are expensive. Glass particles not deposited on the soot body are deposited on the heater and then are vitrified due to a heat of the heater, resulting in a maintenance problem that it is difficult to remove the glass particles from the heater. With the structure of taking some trouble in the equipment maintenance, the preparation time required for producing the next soot body is longer, even with a higher synthesis rate of soot body, resulting in less effect of producing the soot body corresponding to the higher synthesis rate.

### Summary of the Invention

The present invention has been achieved in the light of the above-mentioned problems, and it is an object of the invention to provide an improved method and apparatus for producing a porous glass soot body.

In a method for producing a porous glass soot body, according to the present invention, a plurality of glass particle synthesis burners are arranged to be opposed to a rotating starting rod supported longitudinally within a reaction vessel and glass particles synthesized by the burners are deposited on a surface of the starting rod while the starting rod and the burners are reciprocated in parallel and relatively. Gas is supplied through one or more vent holes toward the starting rod or the glass particles already deposited on the starting rod. The one or more vent holes are provided on the reaction vessel in the vicinity of one or more burners when the burners are placed in the reaction vessel.

In the method for producing a porous glass soot body, gas of different flow rates in a length direction of the starting rod may be supplied through the vent holes, or gas of different temperatures in a length direction of the starting rod may be supplied through the vent holes.

Further, in the method for producing a porous glass soot body, each vent hole may be provided between each burner and the reaction vessel when the burner is placed in the reaction vessel.

An apparatus for producing a porous glass soot body, according to the present invention, comprises a plurality of glass particle synthesis burners, and a reaction vessel. The plurality of glass particle synthesis burners are arranged to be opposed to a rotating starting rod. Each of the burners applies glass particles onto a surface of the rotating starting rod while the burners and the starting rod are reciprocated in parallel and relatively. The starting rod is supported longitudinally in the reaction vessel. The reaction vessel has one ore more vent holes in the vicinity of the one or more burners when the burners are placed in the reaction vessel.

According to the present invention, the one or more vent holes are provided on the reaction vessel in the vicinity of one ore more burners which are placed in the reaction vessel, and the gas of different flow rates and/or temperatures is supplied through the one or more vent holes over the entire length of the sooth body, so that the temperature of the atmosphere around the porous glass soot body can be controlled to be almost uniform within ±15°C where the variations in the bulk density of soot body fall within a tolerance.

### Brief Description of the Drawings

Fig. 1 is an explanatory view showing an embodiment of an apparatus for practicing a method for producing a porous glass soot body according to the present invention;
Fig. 2 is an explanatory view typically showing another embodiment of an apparatus for practicing the method for producing a porous glass soot body according to the present invention;
Fig. 3 is a view showing one example of an air reservoir with the apparatus of Fig. 2;
Figs. 4A-4C are explanatory views showing one example of adjusting means of the gas flow rate to vent holes;
Fig. 5 is an explanatory view showing one example of a burner structure suitably employed with the method for producing a porous glass soot body according to the present invention;
Fig 6 is an explanatory view showing another example of the burner structure suitably employed with the method for producing a porous glass soot body according to the present invention; and
Fig. 7 is an explanatory view showing another example of the vent hole according to the present invention

### Detailed Description of the Invention

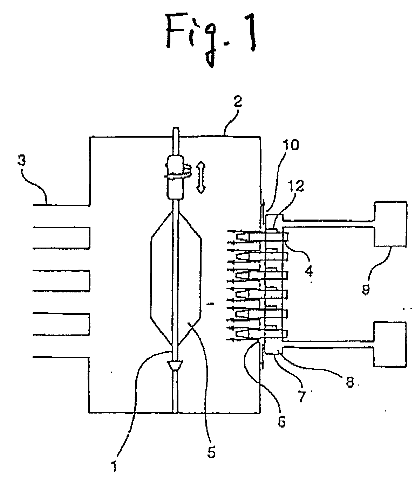

The preferred embodiments of the present invention will be described below with reference to Figs. 1 and 2.

A method for producing a porous glass soot body according to the present invention is basically stated as follows. That is, a plurality of glass particle synthesis burners 4 are arranged at almost even intervals within a reaction vessel 2 provided with the exhaust pipes 3 to be opposed to a rotating starting rod supported longitudinally, and glass particles synthesized by the burners are deposited on a surface of the starting rod 1, one layer after another, while reciprocating the starting rod 1 and the burners 4 in parallel and relatively, thereby producing a porous glass soot body 5. Incidentally, the starting rod 1 reciprocates vertically in the embodiments of Figs. 1 and 2.

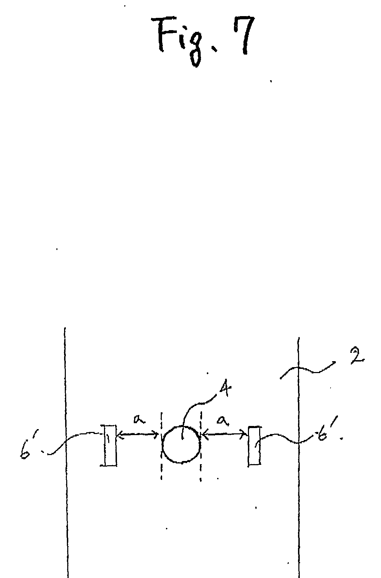

In these embodiments, six burners 4 are set within the reaction vessel 2 in a state where top portions of burners 4 project inside the reaction vessel 2 via an opening provided on the reaction vessel 2. Between each burner 4 and the reaction vessel 2 (that is, between each burner and the corresponding opening of the reaction vessel), a gap is provided to form a vent hole 6 in a form surrounding each burner 4. The gas of different flow rates and/or temperatures is supplied through the vent holes 6 to form an gas stream toward the porous glass soot body 5, and the temperature of the atmosphere around the porous glass soot body 5 is controlled to be almost uniform within ±15°C where the variations in the bulk density of soot body fall within a tolerance. The vent hole may be openings 6', 6' provided in the vicinity of the burner when the burner is placed in the reaction vessel, as shown in Fig. 7. In Fig. 7, each of two opening 6', 6' has a rectangular shape; however, the number and the shape of the opening are not limited to this embodiment. Further, in the present invention, one ore more vent holes are provided on the reaction vessel in the vicinity of the one ore more burners when the burners are placed in the reaction vessel. Thus, the present invention is not limited to the vent holes 6 or pairs of vent holes 6', 6', as shown in Figs. 1-4A or Fig. 7, each which is provided in the vicinity of the each burner 4. The vent hole 6 or a pair of vent holes 6', 6' may be provided only in the vicinity of the predetermined burner 4; or the length of the adjacent longitudinal side of the rectangular vent hole 6' may extend over the plurality of burners 4.

A supplied gas is preferably a clean gas passed through a filter capable of collecting the dust of 0.3µm or greater up to 99.97% or more to prevent foreign substance from adhering to the soot body.5. More specifically, an air reservoir around the burners has preferably an atmosphere of class 100. It is required that the gas does not react with glass particles, and has no chemical effect on generating the flames with the burners. Examples of the gas include the air or the inert gas.

A gas supply method in an embodiment of Fig. 1 is that a cover 7 made of heat resisting fiber is provided outside the reaction vessel 2 in a form covering the vent holes 6 and the entire array of burners 4 to form an air reservoir 8, and the clean gas is supplied from a clean gas generator 9 into the air reservoir 8, and then through the vent holes 6 into the reaction vessel 2. The cover 7 is placed with a gap 10 to be out of contact with the reaction vessel 2, whereby the supply amount of clean gas is adjusted to the extent that the clean gas leaks out of the gap 10 to prevent the outside air from entering the cover 7. The reason of providing the gap 10 is that if the reaction vessel 2 and the cover 7 are contacted, there is a risk that the cover 7 made of heat resisting fiber is degraded and damaged during the deposition, causing the dust to be produced. There is the possibility that this dust adheres to the soot body 5.

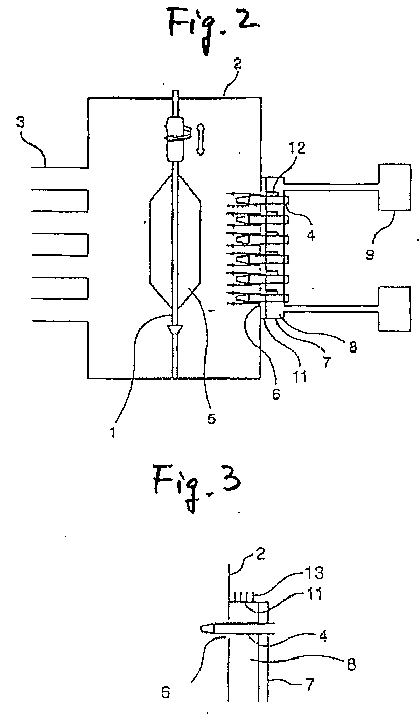

It is preferable to have no gap 10 to prevent the outside air from mixing into the reaction vessel 2. Fig. 2 shows an embodiment of an apparatus without gap 10. A frame 11 surrounding the vent holes 6 and the entire array of burners 4 is installed outside the reaction vessel 2 without gap from the reaction vessel 2, and the cover 7 is put on this frame 11 without gap to form the air reservoir 8. The view of one example of the air reservoir 8 by this method is shown in Fig. 3. Herein, the frame 11 is made of high heat resisting material such as metal, and a fin 13 is provided to improve heat dissipation.

In Figs. 1 and 2, the gas flow to be supplied is indicated by the arrow.

The gas having different flow rate or temperature, or both, is supplied through each vent hole 6. Normally, the flow rate is increased and the temperature is decreased as the vent hole is located at upper position of the reaction vessel.

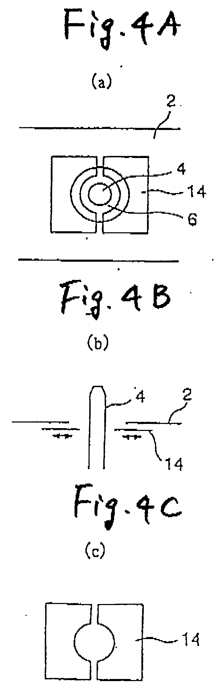

Adjusting means of the gas flow rate is not specifically limited, and one example thereof is shown in Figs. 4A-4C. Fig. 4A is a cross-sectional view of the adjusting means as seen from a perpendicular direction to the burner, and Fig. 4B is a cross-sectional view as seen from above. In this example, a metallic adjusting plate 14 has two sections and a larger hole than the diameter of the burner 4 at the center thereof as shown in Fig. 4C. The metallic adjusting plate 14 is attached to cover a part of the vent hole 6 with the burner 4 sandwiched between two sections. The numerical aperture of the vent hole 6 is adjusted by controlling positions of the two sections of the adjusting plate 14, as shown in Fig. 4B. This adjusting plate is suitable for the case where the air reservoir 8 is provided as shown in Figs. 1 and 2.

As another adjusting means of the gas flow rate, an air supply pipe may be provided for each vent hole to control the gas supply amount to each vent hole. Incidentally, in the case of using the air supply pipe, the equipment is more complex than the method in which the air reservoir is provided.

The means for adjusting the temperature of the supplied gas is not specifically limited, but it is common that the air supply pipe is provided for each vent hole, and cooling means or heating means is installed separately or in combination.

The flow rate or temperature of the gas supplied through the vent holes is controlled so that the temperature of the atmosphere around the porous glass soot body 5 may be almost uniform within ±15°C where a variation in the bulk density of soot body is within a tolerance. As a specific method for setting the flow rate or temperature for each vent hole, for example, the relation between the temperature difference between the upper and lower ends of the porous glass soot body and the flow rate or temperature of the gas through the vent holes is empirically obtained beforehand, and the temperatures at the upper and lower ends of the soot body are measured, whereby the flow rate or the temperature of the gas is set up employing the obtained relation.

Also, temperature measuring means may be provided optionally to measure the temperature of the deposited surface where glass particles synthesized by each burner are deposited for each burner (a radiation thermometer 12 is employed in the examples of Figs. 1 and 2), and the flow rate or temperature of the gas supplied through the vent holes is controlled so that the temperature of each deposited surface may be kept almost constant, thereby making it possible to effect the precise control.

It is desirable to use highly directional burners as the glass particle synthesis burners, for example, burners having ports for blowing out a combustion-support gas or inert gas at a flow rate of 8m/sec or more in the use range. With such burners, it is desirable that the flow rate of the gas from the ports for blowing out the combustion-support gas or inert gas is 8m/sec or more.

Thereby, a turbulence in the flame due to the gas flow supplied through the vent holes is reduced, resulting in the effect that the deposition amount of glass particles is stabilized.

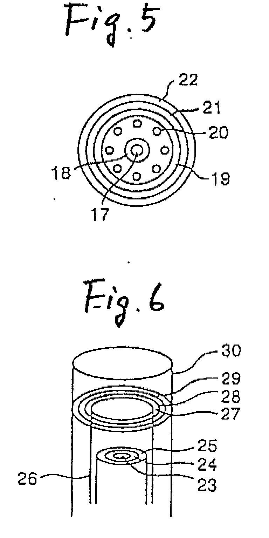

The highly directional burners are, for example, the burners having a gas port 19 having a small opening arranged to enclose the multiple tubes (17, 18) in the center, as shown in Fig. 5. In Fig. 5, the burner has a raw material gas port 17 for blowing out a raw material gas alone or a raw material gas and a combustible gas such as H₂, inert gas ports 18, 21 for blowing out an inert gas such as Ar or N₂, a combustible gas port 19 for blowing out a combustible gas such as H₂ or hydrocarbon gas, for example, . methane gas, and combustion-support gas ports 20, 22 for blowing out a combustion-support gas such as O₂.

Further, a multi-tubular burner of a structure as shown in Fig. 6 may be used. In Fig. 6, the burner has a raw material gas port 23, combustible gas ports 24, 27, inert gas ports 25, 28, combustion-support gas ports 26, 29, andawindshield (guide) 30.

In this type of burners, as shown in Fig. 5, the flow rate of the gas from each port (except for the combustion-support gas port 20) is about 1 to 40 m/sec, while the flow rate of the gas from the combustion-support gas port 20 is about 10 to 40m/sec. In the type of burners as shown in Fig. 6, the flow rate of the gas from the combustion-support gas port 26 or 29 is 8m/sec or more. In another type of burners, though not shown, the flow rate of the gas from the combustion-support gas port or inert gas port, especially the combustion-support gas port located at the outermost side, is preferably 8m/sec or more.

The temperature of the atmosphere around the porous glass soot body is kept almost uniform by supplying the gas with the flow rate or temperature adjusted through the vent holes around the burners, thereby resulting in the effect that the bulk density of soot body is made even, and a variation in the outer diameter of soot body is suppressed. In addition, there is another effect that the glass particles not deposited on the soot body during the deposition of glass particles are exhausted from the reaction vessel more efficiently. Consequently, there is less trouble to make the cleaning, and it takes a shorter setup time.

Generally, the glass particles not deposited on the soot body which comprises the starting rod or the glass particle layers already deposited on the starting rod are exhausted through the exhaust pipes provided in the reaction vessel, but may be possibly deposited on the wall face of the reaction vessel. This layer of glass particles deposited on the wall face is peeled off by its dead weight, deposited again on the soot body, and consolidated and vitrified, resulting in generating air bubbles in the soot body. There is more possibility especially for the glass particles deposited on the upper portion of the reaction vessel. With the method according to the present invention, the flow of gas through the vent hole becomes slightly turbulent near the vent hole, but rides on the flame of the burner as it approaches the soot body, thereby forming a smooth gas stream. This stream is smoothly sucked into the exhaust pipe, so that the glass particles not deposited on the soot body are exhausted more easily. Therefore, a risk that the glass particles peeled off from the wall of reaction vessel are deposited again is reduced.

### [Examples]

Employing an apparatus like that of Fig. 1, a producing test of the porous glass soot body was conducted. In this test, four burners were provided, and the width of gap 10 was set to be 5mm. The burners 4 used were multi-tubular burners as shown in Fig. 5, with the outer diameter of 60mm. The diameter of opening for attaching the burner 4 in the reaction vessel 2 was 75mm, and a gap was formed around the burner 4 to have the vent hole.

### [Example 1]

Four burners opposed to the starting rod (36mm in diameter and 1500mm long) were arranged at an interval of 200mm. The glass particles were deposited on the starting rod 1 that is being rotated around the axis and reciprocated. Four vent holes 6 had an outer diameter of 75mm. During the deposition process, the clean gas (the number of dusts of 0.5µm or greater in diameter was 40/m³, measured by detecting the intensity of scattered light, employing a laser particle counter) at ordinary temperature was supplied to the air reservoir 8 from the clean gas generator 9 in a state that the average flow rate of clean gas blow out from a clean gas generator 9 was 20m³/min.

As a result, the shape of obtained porous glass soot body 5 had an outer diameter of 245mm at the top portion in the effective section which is 600mm long, and 260mm at the bottom portion. The clean gas is supplied uniformly over the entire length of the soot body 5, so that the temperature difference in the length direction of the soot body can be reduced and the soot body can be used as the preform.

### [Example 2]

The porous glass soot body 5 was produced under the same conditions as in the example 1, except that the dimensions of the vent holes 6 around the burners 4 were adjusted, employing the metallic adjusting plate 14 as shown in Figs. 4A-4C. The dimensions of the vent holes 6 were roughly 75mm, 73mm, 70mm and 65mm in outer diameter in the order from the upper position. As a result, the outer diameter of the soot body 5 was 252mm at the top portion in the effective section which is 600mm long, and 260mm at the bottom portion, whereby the unified effect of outer diameter was observed. It was confirmed that the characteristics of the optical fiber could be assured with such a difference in the outer diameter of the soot body.

### [Example 3]

In the method of the example 2, the porous glass soot body 5 was produced in such away that the temperature of deposited surface was measured through a vent hole 6 around each burner, employing a radiation thermometer 12, and the size of the vent hole 6 was finely adjusted using the adjusting plate 14, so that the temperature of deposited surface might be at 700°C. As a result, the outer diameter of the soot body 5 was 2.58mm at the top portion in the effective section which is 600mm long, and 260mm at the bottom portion, whereby the uniform soot body was obtained.

### [Example 4]

The reaction vessel 2, the burners 4, and the vent holes 6 were of the same structure as in the example 1, but the air reservoir was not provided. The clean gas was supplied to each vent hole 6. The glass particles were deposited under the conditions where the temperature of supplied clean gas was 30°C, the supply amount of clean gas was 4m³/min for each burner. Consequently, it was observed that the temperature of deposited surface was 720°C at the top portion in the effective section, and 690°C at the bottom portion, with a temperature difference of about 30°C. The clean gas of the uniform temperature is supplied over the entire length of the soot body, so that the temperature difference in the length direction of the soot body can be reduced, and the temperature of deposited surface over the entire length of the soot body can be within ±15°C.

### [Example 5]

The porous glass soot body 5 was produced under the same conditions as in the example 4 except that the temperature of the clean gas to be supplied was 30°C, 60°C, 90°C and 120°c in the order from the upper position. As a result, the outer diameter of the soot body 5 was 257mm at the top portion in the effective section which is 600mm long, and 258mm at the bottom portion, whereby the uniform soot body 5 was obtained. The temperature of deposited surface was made even such as 720°C at the top portion in the effective section, and 716°C at the bottom portion during deposition.

### [Example 6]

The porous glass soot body 5 was produced under the same conditions as in example 2, except for the shape of the vent hole and the diameter of the opening for attaching the burner in the reaction vessel. The diameter of the opening for attaching the burner in the reaction vessel was 60mm. The two vent holes 6', 6' each having a rectangular shape were provided around the burner 4, as shown in Fig. 7, in a state in which the burner 4 was sandwiched between the vent holes 6', 6' such that the shortest distance a between an adjacent longitudinal side of each rectangular vent hole 6' and the attachment opening for the burner was 10cm. The lengths of the traverse side of the rectangular vent holes 6' were 13mm, 11mm, 9mm, 4mm in order from the upper vent hole while the length of the adjacent longitudinal side of the rectangular vent holes 6' was 60mm for all vent holes 6'. As a result, the outer diameter of the soot body 5 was 258mm at the top portion in the effective section, and 262mm at the bottom portion, whereby the uniform soot body was obtained.

## Claims

1. A method for producing a porous glass soot body by arranging a plurality of glass particle synthesis burners to be able to be opposed to a rotating starting rod supported longitudinally within a reaction vessel and depositing glass particles synthesized by the burners on a surface of said starting rod while reciprocating said starting rod and the burners in parallel and relatively, the method comprising:
supplying gas through one or more vent holes toward the starting rod or the glass particles already deposited on the starting rod, the one or more vent holes being provided on the reaction vessel in the vicinity of the one or more burners when the burners are placed in the reaction vessel.

2. The method for producing a porous glass soot body according to claim 1, wherein gas of different flow rates in a length direction of the starting rod is supplied through the vent holes.

3. The method for producing a porous glass soot body according to claim 1, wherein gas of different temperatures in a length direction of the starting rod is supplied through the vent holes.

4. The method for producing a porous glass soot body according to claim 1, wherein each vent hole is provided between each burner and the reaction vessel when the burner is placed in the reaction vessel.

5. The method for producing the porous glass soot body according to claim 2, wherein a temperature of the gas to be supplied through the vent hole is changed for each vent hole.

6. The method for producing the porous glass soot body according to claim 1, wherein the reciprocating movement is made by fixing the burners and reciprocating the starting rod and an air-reservoir is provided outside the reaction vessel; and the gas is supplied into the air reservoir and then supplied through the vent holes toward the starting rod or the glass particles already deposited on the. starting rod.

7. The method for producing the porous glass soot body according to claim 6, wherein the air reservoir has a frame that surrounds an entire array of burners and a cover that is put on the frame to cover the entire array of burners.

8. The method for producing the porous glass soot body according to any one of claims 1 to 7, further comprising:
measuring a temperature of a deposited surface where the glass particles synthesized by each burner are deposited for each burner,
wherein the temperature or flow rate of the gas to be supplied through the vent hole is adjusted so that the temperature of each deposited surface may be kept almost uniform.

9. The method for producing the porous glass soot body according to any one of claims 2 and 5, wherein the flow rate of gas to be supplied through the vent hole is adjusted by controlling a numerical aperture of the vent hole.

10. The method for producing the porous glass soot body according to any one of claims 2 and 5, wherein the flow rate of g.as to be supplied through the vent. hole is adjusted by controlling a flow rate of gas supplied into the vent hole.

11. The method for producing the porous glass soot body according to anyone of claims 1 to 10, wherein the glass particle synthesis burner has at least one port for blowing out a combustion-support gas or inert gas at a flow rate of 8m/sec or more.

12. An apparatus for producing a porous glass soot body, comprising:
a plurality of glass particle synthesis burners arranged to be able to be opposed to a rotating starting rod, the burners applying glass particles onto a surface of the rotating starting rod while the burners and the starting rod are reciprocated in parallel and relatively; and
a reaction vessel in which the starting rod is supported longitudinally having one or more vent holes in the vicinity of the one ore more burners when the burners are placed in the reaction vessel.

13. The apparatus for producing the porous glass soot body according to claim 12, wherein each vent hole comprises an opening around of the burner which is placed in the reaction vessel.

14. The apparatus for producing a porous glass soot body according to claim 12, further comprising:
a gas supplying section which supplies gas through the vent holes toward the starting rod or the glass particles already deposited on the starting rod.
